# EUROPÄISCHE PATENTSCHRIFT

(11) **EP 4 378 678 B1**
(45) Veröffentlichungstag und Bekanntmachung des Hinweises auf die Patenterteilung: **03.09.2025**
(21) Anmeldenummer: 23208397.2
(22) Anmeldetag: 07.11.2023
(51) Int. Cl.: B32B 3/30, B32B 5/02, B32B 7/02, B32B 15/085, B32B 27/06, B32B 27/32, B32B 29/00

(54) **BAND, INSBESONDERE NARBBAND, VERFAHREN ZU DESSEN HERSTELLUNG UND VERWENDUNG**
STRIP, IN PARTICULAR GRAINED STRIP, METHOD FOR THE PRODUCTION THEREOF AND USE THEREOF
RUBAN, EN PARTICULIER RUBAN DE CLOU, SON PROCÉDÉ DE FABRICATION ET SON UTILISATION

(30) Priorität: 29.11.2022 DE 102022212827
(43) Veröffentlichungstag der Anmeldung: 05.06.2024
(73) Patentinhaber: Benecke-Kaliko AG, 30419 Hannover (DE)
(72) Erfinder: Knecht, Matthias, 30165 Hannover (DE); Dr. Feineis, Susanne, 30165 Hannover (DE)
(74) Vertreter: Preusser, Andrea

(56) Entgegenhaltungen:
- DE-A1- 102019 214 336
- JP-A- 2012 061 820
- US-A- 5 534 593
- US-A1- 2009 117 330
- US-A1- 2009 208 676

## Beschreibung

Die Erfindung betrifft ein Band, insbesondere Narbband, sowie ein Verfahren zum Herstellen eines solchen Bandes und die Verwendung eines solchen Bandes gemäß den Oberbegriffen der Patentansprüche 1, 7 und 12.

Derartige Bänder werden beispielsweise zur Herstellung von Folien und Kunstledern im sogenannten Umkehrbeschichtungsverfahren eingesetzt, bei dem eine die Folie oder eine Schicht des Kunstleders ausbildende Kunststoffschicht auf das Band aufgebracht und auf dem Band aufliegend zur Aushärtung gebracht wird, bevor die solchermaßen ausgebildete Folie oder Schicht des Kunstleders vom Band abgezogen bzw. gelöst wird. Häufig werden derartige Bänder mit einer Oberflächenstrukturierung in Form von Erhebungen und Vertiefungen versehen, die im Falle von Kunstledern beispielsweise einer natürlichen Ledernarbung im Negativ nachempfunden ist und als Positiv in die Oberfläche der auf dem Band aufliegenden Folie bzw. Schicht des Kunstleders eingeformt wird. Diese oberflächlich strukturierten Bänder werden insoweit im Rahmen der Kunstlederherstellung als Narbband bezeichnet.

Bekannte Ausführungsformen derartiger Bänder werden beispielsweise mit einer Oberflächenschicht auf Basis von Polypropylen ausgebildet, die aufgrund der thermoplastischen Eigenschaften von Polypropylen beliebig geprägt werden kann, um die gewünschte Oberflächenstruktur bzw. Narbe zu erreichen. Zur mechanischen Unterstützung ist die aus Polypropylen gebildete Oberflächenschicht auf eine Trägerschicht haftfest aufgebracht, die üblicherweise aus einem textilen Flächengebilde, zum Beispiel einem Vlies oder einem Gewebe oder dergleichen gebildet ist.

Bei der Verwendung eines solchen Bandes als Narbband wird auf die Oberflächenschicht eine reaktive oder aufgeschmolzene Kunststoffschicht aufgebracht, im Falle von Kunstledern häufig auf Basis von Polyurethan oder PVC, die auf der Oberflächenschicht aufliegend ausgeheizt und schlussendlich wieder von der Oberflächenschicht getrennt wird, sodass die ausgehärtete Schicht die Struktur des Narbbandes, genauer gesagt der Oberflächenschicht übernimmt. Um diesen gewünschten Trenneffekt sicherzustellen, ist deshalb die Haftung zwischen der Oberflächenschicht des Narbbandes und der aufgebrachten Beschichtung von besonders essenzieller Bedeutung. Es muss sichergestellt sein, dass sich die aufgebrachte Beschichtung leicht von der Oberflächenschicht ablösen lässt. Bei Bändern aus Polypropylen ist jedoch häufig die Haftung zur aufgebrachten Beschichtung unerwünscht hoch, beispielsweise bei Beschichtungen auf Basis von Silikonmassen. Gleiches gilt für Bänder aus Polypropylen, die mit einer besonders rauen Oberflächenstrukturierung versehen sind, welche ebenfalls unerwünscht haftungserhöhend wirkt.

Insbesondere bei der Herstellung von Kunstledern auf Basis von Polyurethan tritt zudem das Problem auf, dass aus Polypropylen hergestellte Bänder bei Temperaturen über 150 °C ihre eingeprägte Oberflächenstruktur verlieren, wobei insbesondere feine Strukturen aufschmelzen. Überdies ändert sich die Mattierung bzw. der Glanzgrad und auf der Oberflächenschicht hergestellte (Polyurethan-) Beschichtungen verlieren ihre gewünschte Oberflächenstrukturierung bzw. Narbung. Bei Verwendung von Bändern auf Basis von Polypropylen muss von daher die Temperatur der aufgebrachten Beschichtung idealerweise auf einen Bereich unterhalb 150 °C begrenzt werden. Andererseits ist es aber insbesondere bei Polyurethan-Beschichtungen zur vollständigen Aushärtung der Masse häufig nötig, diese Beschichtung auf Temperaturen oberhalb von 150 °C auszuheizen, sodass man bislang auf einen gesonderten zweiten Arbeitsschritt nach dem Ablösen vom aus Polypropylen hergestellten Band übergehen musste, wobei die vom Band getrennte Beschichtung gesondert auf die gewünschte Temperatur oberhalb von 150 °C aufgeheizt werden musste. Dies ist unerwünscht aufwendig.

Es sind von daher alternativ Bänder etabliert, die eine Trägerschicht zum Beispiel auf Basis von Polyethylenterephthalat, Polyolefinfolien oder Papier aufweisen, welche mit einer dünnen Oberflächenschicht auf Basis einer Silikon-Trennbeschichtung versehen sind. Derartige Bänder sind jedoch vergleichsweise teuer und lassen sich mit einer Oberflächenprofilierung, die tiefere Narben umfasst, nur sehr begrenzt versehen.

Überdies lassen sie sich nur sehr schlecht wiederverwenden. Ferner wird die Narbung durch den Papierhersteller festgelegt und damit der Gestaltung durch den Anwender entzogen.

Es wurde auch bereits versucht, ein Papierband oberflächlich mit Polymethylpenten (PMP) zu beschichten, da PMP eine deutlich verbesserte Temperaturbeständigkeit und gute Release-Eigenschaften zeigt. Allerdings erweist sich die Haftung zwischen Papier und PMP als problematisch. Zudem sind tiefere Narbungen ebenfalls kaum darstellbar und die Narbstruktur muss unmittelbar bei der Beschichtung in das PMP eingebracht werden, da eine nachträgliche Verformung kaum noch möglich ist.

Aus der DE 10 2019 214 336 A1 ist es ferner bereits bekannt, auf eine mit einem textilen Träger verbundene Polyolefinschicht eine Oberflächenschicht aus reinem Polymethylpenten (PMP) aufzubringen, um ein Narbband mit verbesserten Eigenschaften zu erhalten. Allerdings ist die Herstellung eines solchen Bandes mit einem Vorverbund aus textilem Träger und Polyolefinschicht sowie anschließender Beschichtung mit PMP vergleichsweise aufwendig und teuer, wobei auch der Rohstoff PMP selbst verglichen mit Polyolefinen, wie Polypropylen, deutlich kostenintensiver ist. Zudem können unterschiedliche Ausdehnungskoeffizienten der einzelnen Schichten bei Temperaturbelastung zu einem "Schüsseln" der Konstruktion und zu einer Verzerrung der in die Oberflächenschicht eingebrachten Narbstruktur führen.

Die US 5 534 593 schlägt eine Zusammensetzung zur Herstellung von Produkten mit verbesserten Release-Eigenschaften vor, die etwa 90 bis 10 Gew.-% PMP mit einem Molekulargewicht zwischen 200.000 und 700.000 sowie einer Schmelzflussrate zwischen 20 g/10 min und 200 g/10 min sowie etwa 10 bis 90 Gew.-% Polypropylen mit einem Molekulargewicht von 150.000 bis 350.000 und einer Schmelzflussrate zwischen 1 g/10 min und 10 g/10 min umfasst, wodurch eine verbesserte Dehnbarkeit und verbesserte Release-Eigenschaften erzielt werden sollen. Die spezifischen Eigenschaften eines Bandes, insbesondere Narbbandes, zur Herstellung von Folien, wie Hochtemperaturbeständigkeit, gute Prägbarkeit, hohe Narbbeständigkeit sowie gute Extrudierbarkeit durch geringe Sprödigkeit sind in dieser Veröffentlichung nicht angesprochen.

Die US 2009/117330 A1 offenbart oberflächenstrukturierte Bänder, die eine Trägerlage, eine äußere Lage und eine Zwischenlage aufweisen, zur Herstellung von geprägtem Kunstleder. Die Zwischenlage kann Polypropylen (PP) und ein Copolymer aus PP und PMP aufweisen, oder lediglich PMP. Die Zwischenlage kann auch einen Blend aus PP und PMP aufweisen. Auch die Zwischenlage weist eine Narbstruktur auf.

Aufgabe der Erfindung ist es, ein Band, insbesondere Narbband, der eingangs genannten Art sowie ein Verfahren zu dessen Herstellung und dessen Verwendung vorzuschlagen, womit die Nachteile des Standes der Technik überwunden werden.

Zur Lösung der gestellten Aufgabe schlägt die Erfindung die Ausgestaltung eines Bandes gemäß den Merkmalen des Patentanspruches 1, ein Verfahren zur Herstellung eines solchen Bandes gemäß Patentanspruch 7 und die Verwendung eines solchen Bandes gemäß Patentanspruch 12 vor.

Das erfindungsgemäße Band zeichnet sich dadurch aus, dass das Compound zur Ausbildung der Oberflächenschicht 50 bis 90 Gew.%, vorzugsweise 50 bis 70 Gew.-% Polymethylpenten (PMP) mit einem Schmelzflussindex (230 °C/2,16 kg) von 9 bis 20 g/10 min und einem Molekulargewicht von 850.000 bis 950.000 Da sowie entsprechend 50 bis 10 Gew.-%, vorzugsweise 50 bis 30 Gew.-% eines Polypropylen-Homopolymers mit einem Schmelzflussindex (230 °C/2,16 kg) von 0,5 bis 0,8 umfasst.

Im Rahmen der Erfindung wurde festgestellt, dass einerseits die Verarbeitbarkeit, welche eine nur geringe Sprödigkeit erfordert und andererseits die Temperaturbeständigkeit des erfindungsgemäßen Bandes über das beanspruchte Mischungsverhältnis von PMP und Polypropylen-Homopolymer in der Oberflächenschicht erreicht wird. Der Anteil an PMP im Compound zur Herstellung der Oberflächenschicht muss dabei erfindungsgemäß mindestens 50 % betragen, wobei das verwendete PMP darüber hinaus ein Molekulargewicht von 850.000-950.000 Da, vorzugsweise etwa 900.000 Da und einen Schmelzflussindex MFI (230 °C / 2,16g) von 9 bis 20 g/10 min aufweisen soll. Darüber hinaus ist auch die erfindungsgemäße Auswahl des im Compound zur Herstellung der Oberflächenschicht enthaltenen Polypropylen-Homopolymers essenziell, da sich erfindungsgemäß herausgestellt hat, dass der im Compound enthaltene Anteil an Polypropylen-Homopolymer einen Schmelzflussindex MFI (230°C / 2,16g) von lediglich 0,5 bis 0,8 g/10min aufweisen darf.

Die Mengen an PMP und Polypropylen-Homopolymer im Compound zur Ausbildung der Oberflächenschicht ergänzen einander zu einer Summe von 100 Gew:-%. Aus Gründen der Kostenersparnis sollte so wenig wie möglich des kostenintensiven PMP eingesetzt werden, wobei jedoch die gewünschten spezifischen Eigenschaften des PMP nicht verloren gehen dürfen. Durch den erfindungsgemäß vorgesehenen niedrigen MFI des Polypropylen-Homopolymer von lediglich 0,5 bis 0,8 g/10min kann sichergestellt werden, dass der PMP-Anteil in dem Compound der Oberflächenschicht auf bis zu 50 Gew.-% verringert werden kann, um Kosten einzusparen. Kombiniert man hingegen ein Polypropylen-Homopolymer mit demgegenüber höheren MFI, zum Beispiel 2-4 g/10min, muss der PMP-Anteil bereits mindestens 70 Gew.-% betragen, um noch vergleichbare Eigenschaften zu erhalten. Darüber hinaus fällt es bei geringerem PMP-Anteil im Compound der Oberflächenschicht leichter, die erhaltene Oberflächenschicht zu prägen, da der entsprechend hohe Anteil an Polypropylen-Homopolymer einen deutlich geringeren Schmelzpunkt aufweist und leichter verformbar ist.

Zugleich zeigt das erfindungsgemäße Band bereits bei einem Mischungsverhältnis von 50 Gew.-% PMP zu 50 Gew.-% Polypropylen-Homopolymer im Compound zur Ausbildung der Oberflächenschicht eine stabile Aufrechterhaltung einer eingebrachten Narbstruktur bis zu einem Temperaturbereich von etwa 210-220 °C, wobei eine nochmals verbesserte Stabilität der Narbstruktur bis zu einer Temperatur von 220 °C durch einen Anteil von 60 Gew.-% PMP zu 40 Gew.-% Polypropylen-Homopolymer im Compound zur Ausbildung der Oberflächenschicht erreicht werden kann. In jedem Fall werden durch die Materialkombination von Polypropylen-Homopolymer und PMP herausragende Release-Eigenschaften sichergestellt, die maßgeblich vom PMP-Anteil aufgrund der diesem innewohnenden geringeren Oberflächenenergie bestimmt werden.

Steigert man jedoch im Compound zur Bildung der Oberflächenschicht den PMP-Anteil auf über 70 Gew.-%, führt dies zu nachteilig hohen Rohstoffkosten, wohingegen bei einer Verringerung des PMP-Anteils unter 50 Gew.-% die die Temperaturfestigkeit des Bandes steigernde Funktion von PMP mehr und mehr in den Hintergrund tritt.

Nach einem Vorschlag der Erfindung wird als Trägerschicht des erfindungsgemäßen Bandes ein textiles Flächengebilde, zum Beispiel ein Vlies, Gestrick, Gewirk oder Gelege vorgesehen, welches aus einer Vielzahl von Fasern und Fasermischungen, beispielsweise Glasfasern, Carbonfasern, Mineralfasern, Baumwolle, Viskose, Polyamid, Polyester und/oder Aramidfasern gebildet sein kann, vorgesehen. Die Trägerschicht kann auch von einer Metallfolie, einem Papierstreifen oder einem Metallband gebildet sein, auf die anschließend die Oberflächenschicht haftfest aufgebracht wird.

Nach einem weiteren Vorschlag der Erfindung kann die haftfeste Verbindung zwischen Oberflächenschicht und Trägerschicht des erfindungsgemäßen Bandes dadurch gesteigert werden, dass zwischen der Trägerschicht und der Oberflächenschicht ein geeigneter Haftvermittler angeordnet wird. Solche Haftvermittler können nach weiterem Vorschlag der Erfindung zum Beispiel Zweikomponenten-Klebstoffe auf Basis von Polyurethanen, Epoxidharzen, Acrylaten oder modifizierten Silikonen sein.

Zur Modifikation bzw. Implementierung weiterer gewünschter Eigenschaften, etwa zur Verbesserung der Temperatur- und Formstabilität, zur Verbesserung der Verarbeitbarkeit und/oder zur Rohstoffeinsparung können darüber hinaus im Compound zur Herstellung der Oberflächenschicht des erfindungsgemäßen Bandes weitere geeignete Zuschlagsstoffe enthalten sein. Diese umfassen beispielsweise Kreide, Talk, Wollastonit, Mica, Quarzgut, Glaskugeln, Glasfasern sowie Flammschutzmittel, Thermoleitfähigkeitsadditive, Gleitmittel, Wärmestabilisatoren, Flussmittel sowie Pigmente und/oder Farbstoffe.

Das erfindungsgemäße Verfahren zur Herstellung des erfindungsgemäßen Bandes, insbesondere Narbbandes, umfasst die Bereitstellung einer Trägerschicht sowie die Herstellung einer Oberflächenschicht aus einem Compound, welches 50 bis 90 Gew.-%, vorzugsweise 50 bis 70 Gew.-% Polymethylpenten mit einem Schmelzflussindex (230 °C/2,16 kg) von 9 bis 20 g/10 min. und einem Molekulargewicht von 850.000 bis 950.000 Da sowie 50 bis 10 Gew.-%, vorzugsweise 50 bis 30 Gew.-% eines Polypropylen-Homopolymers mit einem Schmelzflussindex (230 °C/2,16 kg) von 0,5 bis 0,8 umfasst sowie das anschließende Beschichten der Trägerschicht mit der Oberflächenschicht und das bereichsweise Prägen der Oberflächenschicht mit einer Narbstruktur.

Die Oberflächenschicht aus dem erfindungsgemäß vorgeschlagenen Compound kann insbesondere durch Extrusion bei einer Temperatur im Bereich von 260 °C bis 300 °C hergestellt werden, wobei sie entweder durch Extrusionsbeschichtung Inline auf die bereitgestellte Trägerschicht, gegebenenfalls unter Zwischenlage einer geeigneten Haftvermittlerschicht aufgebracht wird oder aber zunächst aus dem Extruder zu einer Folienschicht extrudiert und anschließend, gegebenenfalls unter Zwischenlagerung als Folienwickel, auf eine bereitgestellte Trägerschicht durch Kaschieren aufgebracht wird.

Zur Haftungsverbesserung kann nach einem weiteren Vorschlag der Erfindung die Oberflächenschicht nach der Extrusion im Bereich der auf die Trägerschicht aufzubringenden Oberfläche mittels Plasma oder einer Coronabehandlung derart oberflächenmodifiziert werden, dass reaktive Gruppen an der Oberfläche ausgebildet werden. Diese können insbesondere mit einer auf die Trägerschicht zuvor aufgebrachten geeigneten Haftvermittlerschicht beim Aufbringen der Oberflächenschicht auf die Trägerschicht zur Reaktion gebracht werden.

In jedem Fall wird der erhaltene und das erfindungsgemäße Band ausbildende Verbund aus Trägerschicht und Oberflächenschicht anschließend bereichsweise im Bereich der Oberflächenschicht geprägt bzw. strukturiert, beispielsweise mittels einer Prägewalze, wobei die Strukturierung bzw. Prägung der Oberflächenschicht nach einem weiteren Vorschlag der Erfindung bei einer Temperatur von etwa 190 °C bis 290 °C, vorzugsweise 200 °C bis 280 °C, durchgeführt wird.

Das erfindungsgemäße Band eignet sich insbesondere zur Verwendung als Narbband im Rahmen der Herstellung von Kunstleder, insbesondere aus Polyurethan oder Polyvinylchlorid, da es infolge des Anteils an PMP im Compound zur Ausbildung der Oberflächenschicht eine Dauergebrauchstemperatur von mehr als 150 °C aufweist, ohne dass die Gefahr besteht, dass die eingebrachte Narbstruktur beeinträchtigt wird oder verloren geht. Das erfindungsgemäße Band kann Temperaturbelastungen bis zu 220 °C problemlos ausgesetzt werden.

Weitere Ausgestaltungen und Einzelheiten des erfindungsgemäßen Bandes sowie dessen Herstellung werden anhand eines Ausführungsbeispiels in den Zeichnungen dargestellt. Es zeigen:
- Figur 1: die Herstellung eines erfindungsgemäßen Bandes;
- Figur 2: den Einsatz des erfindungsgemäßen Bandes als Narbband für die Kunstlederherstellung.

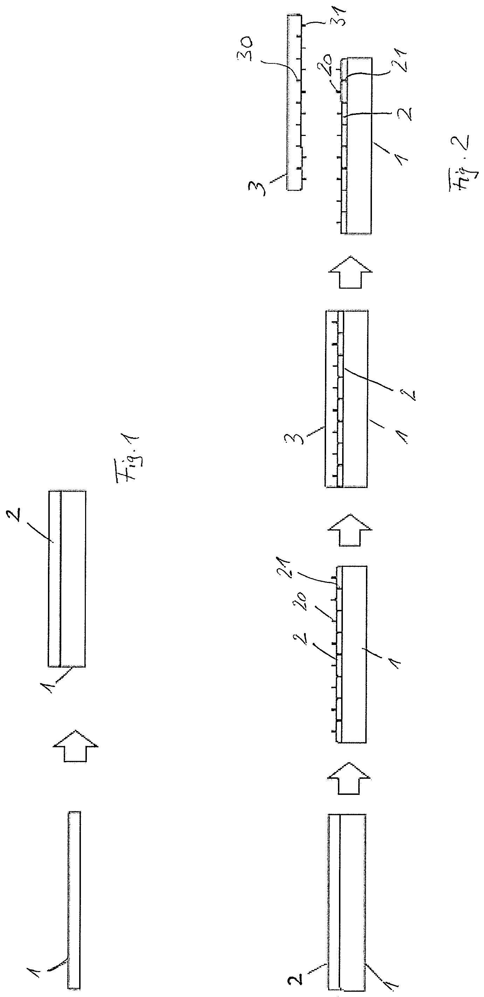

Aus der Figur 1 ist exemplarisch die Herstellung eines erfindungsgemäßen Bandes ersichtlich.

Es wird eine geeignete Trägerschicht 1, beispielsweise ein textiles Flächengebilde mit geringer Streckbarkeit bzw. Dehnbarkeit, hoher Temperaturfestigkeit und homogener Dickenverteilung bereitgestellt. Hierbei kann es sich beispielsweise um ein wasserstrahlverfestigtes Vlies auf Basis von Polyesterfasern handeln. Die Trägerschicht 1 kann insbesondere in Form eines endlosen oder auf ein gewünschtes Längenmaß abgelängten Streifens bereitgestellt werden.

Die in der Darstellung gemäß Figur 1 oberseitig angeordnete Oberfläche der Trägerschicht 1 kann gegebenenfalls mit einer darauf aufgebrachten Schicht eines geeigneten Haftvermittlers, beispielsweise einem Zweikomponentenklebstoff auf Basis von Polyurethan versehen werden oder verbleibt unbehandelt.

Auf die oberseitige Oberfläche der Trägerschicht 1 wird eine gesondert durch Extrusion aus einem auf Verarbeitungstemperaturen im Bereich von 260 °C bis 360 °C eingestellten und hier nicht dargestellten Extruder hergestellte Folie aus einem nachfolgend noch näher erläuterten Kunststoff-Compound aufgebracht, welche nach auf der Trägerschicht 1 eine haftfest mit dieser verbundene Oberflächenschicht 2 ausbildet.

Das aus dem Extruder extrudierte Compound zur Ausbildung der Oberflächenschicht 2 umfasst eine sich zu 100 Gew.-% aufsummierende Abmischung von 50 bis 70 Gew.-% Polymethylpenten mit einem Schmelzflussindex (230 °C/2,16 kg) von 9 bis 20 g/10 min. und einem Molekulargewicht von 850.000 bis 950.000 Da sowie entsprechend 50 bis 30 Gew.-% eines Polypropylen-Homopolymers mit einem Schmelzflussindex (230 °C/2,16 kg) von 0,5 bis 0,8.

Zur weiteren Steigerung der Haftung an der Trägerschicht 1 kann die dieser Trägerschicht 1 zugewandte Oberfläche der Oberflächenschicht 2 vor der Verbindung mit derselben eine Coronabehandlung erfahren, um die Folienoberfläche mittels Reaktion mit Sauerstoff und gegebenenfalls Feuchtigkeit dahingehend zu modifizieren, dass reaktive Gruppen an der Oberfläche entstehen, welche mit dem auf die Trägerschicht 1 aufgebrachten Haftvermittler zur Reaktion gebracht werden können.

Die solchermaßen haftfest auf der Trägerschicht 1 aufgebrachte Oberflächenschicht 2 zeichnet sich durch gute Extrudierbarkeit bei geringer Sprödigkeit, sehr gute Prägbarkeit sowohl mit feinen Prägemustern nur geringer Tiefe als auch Prägemustern großer Tiefe und einer sehr hohen Temperaturbeständigkeit bis zu 220 °C aus. Aufgrund von außerdem vorhandenen sehr guten Release-Eigenschaften eignet sich das solchermaßen gebildete Band insbesondere für den Einsatz als Narbband im Rahmen der Kunstlederherstellung.

Ein solcher Einsatz des gemäß Figur 1 hergestellten Narbbandes in der Kunstlederherstellung ist aus der Figur 2 schematisch ersichtlich.

In der von links nach rechts in der Darstellung gemäß Figur 2 ablaufenden Schrittabfolge erkennt man zunächst ganz links das gemäß Figur 1 hergestellte Band mit Trägerschicht 1 und darauf haftfest aufgebrachter Oberflächenschicht 2.

Dieses endlose oder auf ein gewünschtes Maß abgelängte Band wird zunächst unter Einsatz eines Prägewerkzeugs, beispielsweise einer Prägewalze, mit einer in die oberseitige, zugängliche Oberfläche der Oberflächenschicht 2 eingebrachten Profilierung versehen, die im Rahmen der Kunstlederherstellung eine Narbstruktur mit Erhebungen 20 und Vertiefungen 21 sein kann, welche beispielsweise dem natürlichen Aussehen von Leder nachempfunden ist oder auch geometrische oder abstrakte textile Strukturen umfasst und in Form eines Negativs in die Oberflächenschicht 2 eingeprägt wird. Der Prägeschritt wird bei Temperaturen zwischen 190 °C und 290 °C, bevorzugt etwa 200 und 280 °C durchgeführt und ist vom Fachmann in Abhängigkeit von der Rezeptur des Compounds zur Ausbildung der Oberflächenschicht 2 auszuwählen.

Im nächstfolgenden Schritt wird in an sich bekannter Weise nach dem sogenannten Umkehrverfahren auf die geprägte und mit der Narbstruktur 20, 21 versehene Oberflächenschicht 2 eine oberseitige Schicht 3 eines Kunstleders aufgebracht, beispielsweise aufgestrichen oder aufgerakelt, bei der es sich insbesondere um eine Schicht 3 aus Polyurethan oder Polyvinylchlorid handeln kann. Derartige Kunststoffe werden üblicherweise mit Temperaturen oberhalb von 150 °C aufgebracht bzw. bei Temperaturen oberhalb von 150 °C ausgeheizt, um die gewünschte Schicht 3 auszubilden und die vorhandenen reaktiven Gruppen vollständig umzusetzen. Darüber hinaus wird während der Ausbildung der auf die Oberflächenschicht 2 aufgebrachten Schicht 3 auch das Prägemuster der Oberflächenschicht 2 in der sich ausbildenden Schicht 3 im Positiv abgeformt.

Sobald die auf der Oberflächenschicht 2 aufliegende Schicht 3 ausgebildet und verfestigt ist, wird im abschließenden Schritt gemäß Darstellung der Figur 2 ganz rechts die Schicht 3 von der Oberflächenschicht 2 des Bandes abgezogen, sodass eine geprägte und mit der gewünschten Ledernarbung versehene Oberfläche mit im Positiv ausgeformten Erhebungen 31 und Vertiefungen 30 der vereinzelten Schicht 3 erhalten wird. Aufgrund der guten Release-Eigenschaften sowie Temperaturbeständigkeit der Oberflächenschicht 2 des Bandes lässt sich die Schicht 3 leicht und beschädigungssowie rückstandsfrei von der Oberfläche der Oberflächenschicht 2 abziehen. Das erfindungsgemäße Band mit Trägerschicht 1 und Oberflächenschicht 2 kann anschließend wiederverwendet werden, d. h. der Vorgang gemäß Figur 2 wird wiederholt.

### Ausführungsbeispiele:

Zur Überprüfung der gewünschten Eigenschaften einer auf Basis eines Compounds von PMP und Polypropylen gebildeten Oberflächenschicht wurden verschiedene in der Tabelle 1 angegebene Anteile von PMP mit einem Molekulargewicht von 900.000 Da und verschiedene Polypropylen-Homopolymere mit unterschiedlichem MFI auf einem Extruder zu einer Folienschicht extrudiert und - sofern die Extrusion einer Schicht möglich war - zunächst auf einen Wickler aufgewickelt und anschließend auf eine textile Trägerschicht auf Basis eines Polyestervlieses kaschiert, um eine Oberflächenschicht auszubilden. Anschließend wurde die solchermaßen gebildete Oberflächenschicht mit einer Narbstruktur durch Abformung von einer Prägewalze bei Temperaturen zwischen 200 und 280 °C versehen.

Der in der Tabelle 1 angegebene Schmelzflussindex (MFI) der eingesetzten PMP- und PP-Typen wurde den Herstellerangaben entnommen, das Molekulargewicht der beiden PMP-Typen wurde mittels GPC in Trichlorbenzol bei 160 °C und einer konventionellen Kalibration mit Polystyrol-Standards bestimmt.

Die Überprüfung der Extrudierbarkeit wurde durch Beobachtung der erhaltenen Sprödigkeit ermittelt, die mit der Extrudierbarkeit gleichgesetzt werden kann. Ist das erhaltene Material der Schicht zu spröde, bricht die Folie am Wickler, was in Tabelle 1 mit "-" oder "--" je nach Stärke der Bruchneigung klassifiziert wurde. Dementsprechend waren bei zu großer Sprödigkeit die weiteren Untersuchungen nicht durchführbar.

Die in Tabelle 1 angegebene Temperatur-/Narbstabilität wurde visuell nach einer Temperaturbehandlung der geprägten Oberflächenschicht in einem Ofen (Labcoater LTE-S der Firma Mathis AG) bei Temperaturen von 180-220 °C und einer Verweildauer von 5-60 Minuten bezüglich des festzustellenden Verlustes der Narbtiefe und Aufglänzen der Oberfläche beurteilt. Eine schlechte bzw. unbrauchbare Temperatur-/Narbstabilität wurde in Tabelle 1 mit "--", eine nur eingeschränkt brauchbare Temperatur-/Narbstabilität mit "-" und eine gute bzw. brauchbare Temperatur-/Narbstabilität mit "+" sowie eine sehr gute bzw. brauchbare Temperatur-/Narbstabilität mit "++" klassifiziert.

Zudem wurde die Prägbarkeit visuell entsprechend der Übertragung der Narbstruktur der Prägewalze auf die Oberfläche der Oberflächenschicht und mittels Bestimmung der erhaltenen Narbtiefe unter Einsatz eines Reflexions-Messgeräts Micro CAD der Fa GFM beurteilt. Die Ergebnisse der ermittelten Streckbarkeit wurden wie die Temperatur-/Narbstabilität klassifiziert und in Tabelle 1 angegeben.

**Tabelle 1**

| PMP | | PP | | Sprödigkeit | Temperatur-/Narbstabilität | Prägbarkeit |
|---|---|---|---|---|---|---|
| MFI | Anteil (Gew.-%) | MFI | Anteil (Gew.-%) | | | |
| 9 | 50 | 0,5 | 50 | + | ++ | + |
| 9 | 50 | 0,8 | 50 | -- | | + |
| 9 | 30 | 0,8 | 70 | - | -- | + |
| 9 | 50 | 2 | 50 | - | -- | |
| 9 | 70 | 2 | 30 | - | - | - |
| 9 | 50 | 4 | 50 | -- | | |
| 20 | 50 | 0,5 | 50 | ++ | ++ | ++ |
| 21 | 50 | 0,8 | 50 | ++ | ++ | ++ |
| 20 | 50 | 4 | 50 | - | -- | |
| 25+9 | 25+25 | 0,8 | 50 | -- | | ++ |

Anschließend wurde das für den Einsatz in der Kunstlederherstellung wichtige Release-Verhalten geprüft, indem die einzelnen Bänder gemäß Tabelle 1 mit einer oder mehreren Schichten einer PU- oder PVC-Paste einer definierten Auflage bestrichen wurden. Nach jeweiligen Ausheiz- und Vernetzungszeiten bzw. Verweildauern im Ofen (Labcoater LTE-S der Firma Mathis AG) wurde die Haftkraft in N der ausgehärteten PU- oder PVC-Schichten auf den einzelnen Bändern unter einem definierten Winkel von 90° an einem IMASS Slip/Peel-Tester bestimmt. Alle getesteten Varianten der Bänder zeigten ein vergleichbares und für die Anwendung als Narbband gleichermaßen geeignetes Release-Verhalten.

Das vorangehend erläuterte Band eignet sich insbesondere für den Einsatz als Narbband in der Kunstlederherstellung, darüber hinaus auch für verschiedene weitere Anwendungen im Bereich der Beschichtungstechnik mit einem breiten Spektrum an Polymeren, wie PVC, PU, Acrylaten, Silikon sowie verschiedenen Haftklebstoffen.

Das erfindungsgemäße Band zeichnet sich durch eine besonders hohe Temperaturbeständigkeit bis zu 220 °C, gute Strukturierbarkeit bzw. Prägbarkeit sowie gute Release-Eigenschaften aus, die eine Lackierung der Narbband-Oberfläche entbehrlich machen. Durch den vergleichsweise hohen Anteil an PP-Homopolymer im Compound zur Ausbildung der Oberflächenschicht und den lediglich einschichtigen Aufbau der Oberflächenschicht auf der Trägerschicht werden überdies deutliche Kostenvorteile gegenüber reinen PMP Folien erzielt. Aufgrund der hohen Temperaturbeständigkeit können auf das Band applizierte PVC- bzw. PU-Schichten durch die hohe mögliche Ausheiztemperatur emissionsoptimiert hergestellt werden.

Sofern gewünscht bzw. notwendig, kann jedoch die Oberflächenschicht 2 auch mehrere Einzelschichten gleichen oder unterschiedlichen Aufbaus umfassen.

### Bezugszeichenliste:

- 1: Trägerschicht
- 2: Oberflächenschicht
- 3: Schicht eines Kunstleders
- 20: Erhebungen
- 21: Vertiefungen
- 30: Vertiefungen
- 31: Erhebungen

## Patentansprüche

1. Band, insbesondere Narbband, zur Herstellung von Folien, mit einer Trägerschicht (1) und einer auf die Trägerschicht (1) aufgebrachten und bereichsweise mit einer Narbstruktur (20,21) versehenen Oberflächenschicht (2), die auf Basis eines Compounds von Polymethylpenten (PMP) und Polypropylen (PP) gebildet ist, **dadurch gekennzeichnet, dass** das Compound zur Ausbildung der Oberflächenschicht (2) 50 bis 90 Gew.-% Polymethylpenten mit einem Schmelzflussindex (230 °C/2,16 kg) von 9 bis 20 g/10 min und einem Molekulargewicht von 850.000 bis 950.000 Da, gemessen wie in der Beschreibung angegeben, sowie 50 bis 10 Gew.-% eines Polypropylen-Homopolymers mit einem Schmelzflussindex (230 °C/2,16 kg) von 0,5 bis 0,8 umfasst.

2. Band nach Anspruch 1, **dadurch gekennzeichnet, dass** das Compound zur Ausbildung der Oberflächenschicht (2) 50 bis 70 Gew.-% des Polymethylpenten und 50 bis 30 Gew.-% des Polypropylen-Homopolymers umfasst.

3. Band nach Anspruch 1 oder 2, **dadurch gekennzeichnet, dass** das Compound zur Ausbildung der Oberflächenschicht (2) 50 bis 60 Gew.-% des Polymethylpenten und 50 bis 40 Gew.-% des Polypropylen-Homopolymers umfasst.

4. Band nach Anspruch 1 bis 3, **dadurch gekennzeichnet, dass** als Trägerschicht (1) ein Vlies, Gestrick, Gewirk oder Gelege auf Basis von Glasfasern, Carbonfasern, Mineralfasern, Baumwolle, Viskose, Polyamid, Polyester und/oder Aramidfasern oder einer Metallfolie, Papier oder einem Metallband gebildet ist.

5. Band nach einem der Ansprüche 1 bis 4, **dadurch gekennzeichnet, dass** die Oberflächenschicht (2) unter der Zwischenlage eines Haftvermittlers auf die Trägerschicht (1) haftfest aufgebracht ist.

6. Band nach Anspruch 5, **dadurch gekennzeichnet, dass** als Haftvermittler ein ZweiKomponenten-Klebstoff auf Basis von Polyurethanen, Epoxidharzen, Acrylaten oder modifizierten Silikonen eingesetzt ist.

7. Band nach einem der Ansprüche 1 bis 6, **dadurch gekennzeichnet, dass** das Compound zur Ausbildung der Oberflächenschicht (2) Zuschlagsstoffe, ausgewählt aus der Kreide, Talk, Wollastonit, Mica, Glaskugeln, Glasfasern, Flammschutzmittel, Thermoleitfähigkeitsadditive, Gleitmittel, Wärmestabilisatoren, Flussmittel, Pigmente und/oder Farbstoffe umfassenden Gruppe enthält.

8. Verfahren zur Herstellung eines Bandes, insbesondere Narbbandes, nach einem der vorangehenden Ansprüche, **gekennzeichnet durch** die folgenden Schritte:
- Bereitstellung einer Trägerschicht (1);
- Herstellung einer Oberflächenschicht (2) aus einem Compound, welches 50 bis 90 Gew.-% Polymethylpenten mit einem Schmelzflussindex (230 °C/2,16 kg) von 9 bis 20 g/10 min und einem Molekulargewicht von 850.000 bis 950.000 Da, gemessen wie in der Beschreibung angegeben, sowie 50 bis 10 Gew.-% eines Polypropylen-Homopolymers mit einem Schmelzflussindex (230 °C/2,16 kg) von 0,5 bis 0,8 umfasst;
- Beschichten, insbesondere Kaschieren der Trägerschicht (1) mit der Oberflächenschicht (2);
- Bereichsweises Prägen der Oberflächenschicht (1) mit einer Narbstruktur.

9. Verfahren nach Anspruch 8, **dadurch gekennzeichnet, dass** auf die Trägerschicht (1) ein Haftvermittler aufgebracht und anschließend die Oberflächenschicht (2) auf den auf der Trägerschicht (1) aufgebrachten Haftvermittler beschichtet wird.

10. Verfahren nach einem der Ansprüche 8 oder 9, **dadurch gekennzeichnet, dass** die Oberflächenschicht (2) bei einer Temperatur im Bereich von 260 °C bis 300 °C extrudiert und auf die Trägerschicht (1) aufgebracht wird.

11. Verfahren nach Anspruch 10, **dadurch gekennzeichnet, dass** die Oberflächenschicht (2) nach der Extrusion im Bereich der auf die Trägerschicht (1) aufzubringenden Oberfläche mittels Plasma oder einer Coronabehandlung derart oberflächenmodifiziert wird, dass reaktive Gruppen an der Oberfläche ausgebildet werden und anschließend die Oberflächenschicht (2) auf die Trägerschicht (1) aufgebracht wird.

12. Verfahren nach einem der Ansprüche 8 bis 11, **dadurch gekennzeichnet, dass** das Prägen der Oberflächenschicht (1) bei einer Temperatur von 190 °C bis 290 °C durchgeführt wird.

13. Verwendung eines Bandes, insbesondere Narbbandes, nach einem der vorhergehenden Ansprüche 1 bis 7 und/oder hergestellt nach einem der vorhergehenden Ansprüche 8 bis 12 zur Herstellung von Kunstleder, insbesondere aus Polyurethan oder Polyvinylchlorid, bei einer Dauergebrauchstemperatur von mehr als 150 °C.

## Claims

1. Tape, especially grain tape, for producing films comprising a carrier layer (1) and a surface layer (2) which is applied to the carrier layer (1) and provided in regions with a grain structure (20,21) and is formed on the basis of a compound of polymethylpentene (PMP) and polypropylene (PP), **characterized in that** the compound for forming the surface layer (2) comprises 50% to 90% by weight of polymethylpentene having a melt flow index (230°C/2.16 kg) of 9 to 20 g/10 min and a molecular weight of 850 000 to 950 000 Da, measured as specified in the description, and 50% to 10% by weight of a polypropylene homopolymer having a melt flow index (230°C/2.16 kg) of 0.5 to 0.8.

2. Tape according to Claim 1, **characterized in that** the compound for forming the surface layer (2) comprises 50% to 70% by weight of the polymethylpentene and 50 to 30% by weight of the polypropylene homopolymer.

3. Tape according to Claim 1 or 2, **characterized in that** the compound for forming the surface layer (2) comprises 50% to 60% by weight of the polymethylpentene and 50% to 40% by weight of the polypropylene homopolymer.

4. Tape according to Claims 1 to 3, **characterized in that** the carrier layer (1) is a nonwoven fabric, a drawn-loop or formed-loop knitted fabric or a non-crimp fabric based on glass fibres, carbon fibres, mineral fibres, cotton, viscose, polyamide, polyester and/or aramid fibres or a metal foil, paper or a metal tape.

5. Tape according to any of Claims 1 to 4, **characterized in that** the surface layer (2) is applied to the carrier layer (1) in a firmly adherent manner with interposition of an adhesion promoter.

6. Tape according to Claim 5, **characterized in that** the adhesion promoter employed is a two-component adhesive based on polyurethanes, epoxy resins, acrylates or modified silicones.

7. Tape according to any of Claims 1 to 6, **characterized in that** the compound for forming the surface layer (2) contains additives selected from the group comprising chalk, talc, wollastonite, mica, glass spheres, glass fibres, flame retardants, thermal conductivity additives, lubricants, heat stabilizers, fluxes, pigments and/or dyes.

8. Process for producing a tape, especially grain tape, according to any of the preceding claims, **characterized by** the steps of:
- providing a carrier layer (1);
- producing a surface layer (2) from a compound which comprises 50% to 90% by weight of polymethylpentene having a melt flow index (230°C/2.16 kg) of 9 to 20 g/10 min and a molecular weight of 850 000 to 950 000 Da, measured as specified in the description, and 50% to 10% by weight of a polypropylene homopolymer having a melt flow index (230°C/2.16 kg) of 0.5 to 0.8;
- coating, especially laminating, the carrier layer (1) with the surface layer (2);
- embossing of regions of the surface layer (1) with a grain structure.

9. Process according to Claim 8, **characterized in that** an adhesion promoter is applied to the carrier layer (1) and then the surface layer (2) is coated onto the adhesion promoter applied to the carrier layer (1).

10. Process according to either of Claims 8 or 9, **characterized in that** the surface layer (2) is extruded at a temperature in the range from 260°C to 300°C and applied to the carrier layer (1).

11. Process according to Claim 10, **characterized in that** after extrusion the surface layer (2) is surface-modified using plasma or a corona treatment in the region of the surface to be applied to the carrier layer (1) such that reactive groups are formed on the surface and the surface layer (2) is then applied to the carrier layer (1).

12. Process according to any of Claims 8 to 11, **characterized in that** the embossing of the surface layer (1) is performed at a temperature of 190°C to 290°C.

13. Use of a tape, especially grain tape, according to any one of the preceding Claims 1 to 7 and/or produced according to any of the preceding Claims 8 to 12 for production of artificial leather, especially from polyurethane or polyvinyl chloride, at a continuous usage temperature of more than 150°C.

## Revendications

1. Ruban, en particulier ruban grainé, pour la fabrication de feuilles, présentant une couche support (1) et une couche de surface (2) appliquée sur la couche support (1) et pourvue par zones d'une structure grainée (20, 21), qui est formée sur la base d'un compound de polyméthylpentène (PMP) et de polypropylène (PP), **caractérisé en ce que** le compound comprend, pour la formation de la couche de surface (2), 50 à 90% en poids de polyméthylpentène présentant un indice de fluidité à chaud (230°C/2,16 kg) de 9 à 20 g/10 min et une masse moléculaire de 850.000 à 950.000 Da, mesurée comme décrit dans la description, ainsi que 50 à 10% en poids d'un homopolymère de polypropylène présentant un indice de fluidité à chaud (230°C/2,16 kg) de 0,5 à 0,8.

2. Ruban selon la revendication 1, **caractérisé en ce que** le compound comprend, pour la formation de la couche de surface (2), 50 à 70% en poids du polyméthylpentène et 50 à 30% en poids de l'homopolymère de polypropylène.

3. Ruban selon la revendication 1 ou 2, **caractérisé en ce que** le compound comprend, pour la formation de la couche de surface (2), 50 à 60% en poids du polyméthylpentène et 50 à 40% en poids de l'homopolymère de polypropylène.

4. Ruban selon la revendication 1 à 3, **caractérisé en ce qu'**un non-tissé, un tricot, un tissu maille ou une nappe à base de fibres de verre, de fibres de carbone, de fibres minérales, de coton, de viscose, de polyamide, de polyester et/ou de fibres d'aramide ou une feuille métallique, du papier ou une bande métallique est formé(e) en tant que couche support (1).

5. Ruban selon l'une des revendications 1 à 4, **caractérisé en ce que** la couche de surface (2) est appliquée de manière adhérente, avec interposition d'un promoteur d'adhérence, sur la couche support (1).

6. Ruban selon la revendication 5, **caractérisé en ce qu'**un adhésif à deux composants à base de polyuréthanes, de résines époxyde, d'acrylates ou de silicones modifiées est utilisé comme promoteur d'adhérence.

7. Ruban selon l'une des revendications 1 à 6, **caractérisé en ce que** le compound contient, pour la formation de la couche de surface (2), des additifs choisis dans le groupe comprenant la craie, le talc, la wollastonite, le mica, les billes de verre, les fibres de verre, les agents ignifuges, les additifs de thermoconductibilité, les lubrifiants, les stabilisants thermiques, les fondants, les pigments et/ou les colorants.

8. Procédé de fabrication d'un ruban, en particulier d'un ruban grainé, selon l'une des revendications précédentes, **caractérisé par** les étapes suivantes :
- mise à disposition d'une couche support (1) ;
- fabrication d'une couche de surface (2) à partir d'un compound qui comprend 50 à 90% en poids de polyméthylpentène présentant un indice de fluidité à chaud (230°C/2,16 kg) de 9 à 20 g/10 min et une masse moléculaire de 850.000 à 950.000 Da, mesurée comme décrit dans la description, ainsi que 50 à 10% en poids d'un homopolymère de polypropylène présentant un indice de fluidité à chaud (230°C/2,16 kg) de 0,5 à 0,8 ;
- revêtement, en particulier contrecollage, de la couche support (1) et de la couche de surface (2) ;
- gaufrage par zones de la couche de surface (1) par une structure grainée.

9. Procédé selon la revendication 8, **caractérisé en ce qu'**un promoteur d'adhérence est appliqué sur la couche support (1) et ensuite, la couche de surface (2) est revêtue sur le promoteur d'adhérence appliqué sur la couche support (1).

10. Procédé selon l'une des revendications 8 ou 9, **caractérisé en ce que** la couche de surface (2) est extrudée à une température dans la plage de 260°C à 300°C et appliquée sur la couche support (1).

11. Procédé selon la revendication 10, **caractérisé en ce que** la couche de surface (2) est modifiée en surface après l'extrusion dans la zone de la surface à appliquer sur la couche support (1) au moyen d'un plasma ou d'un traitement corona de telle sorte que des groupes réactifs sont formés sur la surface et la couche de surface (2) est ensuite appliquée sur la couche support (1).

12. Procédé selon l'une des revendications 8 à 11, **caractérisé en ce que** le gaufrage de la couche de surface (1) est effectué à une température de 190 à 290°C.

13. Utilisation d'un ruban, en particulier d'un ruban grainé, selon l'une des revendications précédentes 1 à 7 et/ou fabriqué selon l'une des revendications précédentes 8 à 12 pour la fabrication de cuir synthétique, en particulier en polyuréthane ou en poly(chlorure de vinyle), à une température d'utilisation de plus de 150°C.
